# EUROPEAN PATENT SPECIFICATION

(11) **EP 2 500 645 B1**
(45) Date of publication and mention of the grant of the patent: **28.01.2015**
(21) Application number: 11305295.5
(22) Date of filing: 16.03.2011
(51) Int. Cl.: F23D 14/22, F23D 14/32, F23L 7/00

(54) **Oxygen-fired low-NOx gas burner and combustion method**
Sauerstoff-befeuerter Gasbrenner mit reduzierten NOx-Werten und Verbrennungsverfahren
Brûleur à gaz à oxygéne avec émission réduite de NOx et procédé de combustion

(43) Date of publication of application: 19.09.2012
(73) Proprietor: L'AIR LIQUIDE, Société Anonyme pour l'Etude et l'Exploitation des Procédés Georges Claude, 75007 Paris (FR)
(72) Inventor: Laurent, Jacky, 78210 Saint-Cyr L'Ecole (FR); Marcano, Niomar, 78000 Versailles (FR); Mazas, Antoine, 75015 Paris (FR); Mulon, Jacques, 91300 Massy (FR); Tsiava, Rémi, 91250 Saint Germain-Les-Corbeil (FR)
(74) Representative: De Vleeschauwer, Natalie Y.L.D.

(56) References cited:
- EP-A1- 2 080 952
- US-A- 4 445 842
- US-A- 5 098 282
- US-A1- 2003 175 636

## Description

The present invention relates to a reduced-NOx burner and combustion method.

Thermal processes, in which the thermal energy comes from the combustion of a fuel, face ever stricter environmental constraints, in particular in terms of NOx emissions.

Examples of such thermal processes are steam generation and melting processes.

The two most prevalent techniques used to reduce NOx emissions are staged combustion and use of flue gas recirculation (FGR).

Staged combustion, i.e. combustion in stages, is accomplished by staging the injection of the fuel and/or of the oxidizer. Staging partially delays the combustion process, resulting in lower combustion temperatures, it being known that higher combustion temperatures contribute to NOx formation

In FGR, a portion of the flue gases generated by the combustion is recycled back to the combustion zone. The recycled flue gas reduces NOx emissions by two mechanisms. It firstly reduces nitrogen concentrations in the combustion zone and secondly acts as an inert of ballast to reduce the oxygen concentration and thereby the combustion temperatures.

Known FGR methods and burners operate essentially in two distinct ways. According to a first known option, the recycled flue gas is mixed with combustion oxidizer before it is recycled into the combustion zone, i.e. the recycled flue gas is mixed with combustion oxidizer upstream of or upon their introduction into the burner, typically so as to reconstitute an oxidizer comprising about 21 to 27% oxygen and the remainder essentially consisting of CO₂ instead of nitrogen. A burner of this type is described in US-A-4089629. It is an advantage of this option that it can operate with known air-fuel burners and with minor operating adjustments. However, premixing of flue gases with oxygen before or upon their introduction into the burner presents a safety risk.

An alternative known option, which avoids this problem, is the separate injection of recycled flue gas and oxygen into the combustion zone, either through separate devices at different locations within the combustion chamber or through separate points of injection of one given burner. When using the latter option, the injection of flue gas through the burner may cause the flame to lengthen. In the case of narrow combustion chambers, this may lead to overheating of elements of the combustion chamber located opposite the burner (e.g. opposite wall or tubes, in the case of a boiler), and ultimately furnace failure.

This risk can be avoided by injecting the recycled flue gas at low velocities. However, this requires burners of increased size and creates layout problems, in particular in combustion chambers requiring a large number of burners.

Particularly effective FGR burners with separate injection of recycled flue gas are described in WO-A-2009/090232 and US-A-2009311638.

The documents US 5 098 282 A and US 2003/175636 A1 both describe a gas burner having an ejector-type mixing unit for mixing fuel gas and flue gas, and surrounding oxidizer means.

In certain cases, in particular in furnaces shielded from the nitrogen-rich air atmosphere, oxy-fuel combustion is an option for reducing NOx formation due to the lower or even zero nitrogen content in the oxidant. Also due to the lower nitrogen content of the oxidant, when compared to combustion air, oxy-fuel combustion can also be of interest for reducing CO₂ emissions. Indeed, due to the higher CO₂ concentration in the oxy-fuel combustion flue gases, CO₂ capture and sequestration becomes an option.

There is, from an environmental point of view, a clear need for low-NOx oxygen-fuel combustion equipment and processes.

It is an aim of the present invention to provide an improved reduced-NOx staged combustion method and burner.

It is a further aim of the invention to provide an improved reduced-NOx staged combustion method and burner suitable for use with FGR.

Thereto, the present invention provides a burner assembly comprising a primary fuel passage for transporting gaseous primary fuel through the burner assembly towards a combustion zone downstream of the burner and a primary ballast gas passage for transporting primary ballast gas through the burner assembly to the combustion zone.

According to the invention, the primary fuel passage and the primary ballast gas passage are part of an eductor-jet pump for generating a mixed jet of the primary fuel and the primary ballast gas and for injecting said mixed jet into the combustion zone. As is known by the person skilled in the art, an eductor-jet pump generates gaseous mixtures by entrainment of a suction fluid by a motive fluid.

The burner assembly also comprises a primary oxidizer passage for injecting a jet of primary oxidizer into the combustion zone in contact with the mixed jet so as thereby to generate a primary flame in the combustion zone. In the present context, the term "primary flame" refers to the flame obtained through the combustion of the mixed jet with the primary oxidizer. As, in accordance with the invention, the primary fuel and the primary oxidizer are not normally injected at a stoichiometric ratio, the combustion gasses generated by the primary flame normally still contain a portion of either the primary fuel or the primary oxidizer.

The burner assembly further comprises a secondary oxidizer passage for injecting a jet of secondary oxidizer into the combustion zone and/or a secondary fuel passage for injecting a jet of secondary fuel into the combustion zone.

The secondary oxidizer passage of the burner assembly is adapted to inject the jet of secondary oxidizer into the combustion zone at a distance ℓₒₛ (>0) from the mixed jet oxidizer jet and/or the jet of secondary fuel in injected into the combustion zone at a distance lₒₛ (>0) from the mixed jet. Thus, when the combustion gasses generated by the primary flame still contain a portion of the primary fuel, secondary oxidizer can be injected through the secondary oxidizer passage for the combustion of said portion of the primary fuel with the secondary oxidizer downstream of the primary flame. Likewise, when the combustion gases generated by the primary flame still contain a portion of the primary oxidizer, secondary fuel can be injected through the secondary fuel passage for the combustion of said secondary fuel with said portion of the primary oxidizer downstream of the primary flame.

In addition to the primary ballast gas passage, which forms part of the eductor-jet pump, the burner assembly of the invention also comprises a secondary ballast gas passage for injecting a secondary ballast gas jet into the combustion zone, said secondary ballast gas passage not being part of the eductor-jet pump.

In the present context, the "distance" between two jets means the distance between the respective injection points or nozzles of said jets.

Injection nozzles may have various shapes. An injection nozzle may, for example, be circular, annular, elongated, etc.

By means of the eductor-jet pump, of primary fuel in the primary flame is diluted. This leads to a reduction of the temperature in the primary flame and thus to a reduction in the NOx generated in the primary flame.

Compared to mechanical pumps and mixing devices, the eductor-jet pump further presents the advantage of being robust and low in maintenance.

Preferably, the gaseous primary fuel is used as the motive fluid and the primary ballast gas is the suction fluid (also referred to as "entrained fluid"). Thereto motive fluid nozzle of the eductor-jet pump is connected to a source of the gaseous primary fuel and the suction fluid inlet of the eductor-jet pump is connected to a source of primary ballast gas.

In the context of the present invention, a ballast gas is a gas containing from 0%vol to 19%vol oxygen and from 0%vol to 50%vol nitrogen. Preferably, the ballast gas contains from 0%vol to 10%vol oxygen and from 0%vol to 30%vol nitrogen. Preferably, the ballast gas contains little or no nitrogen. Suitable ballast gases are recycled flue gas (also referred to as "recycled combustion gases"), steam and CO₂-rich gas (containing typically from 80%vol to 100%vol CO₂). In practice, the choice of the ballast gas will depend on technical and economic considerations, such as flame properties, availability of ballast gas and overall process efficiency. For example, in the case of a steam generation boiler, the use of part of the generated steam as ballast gas may be inappropriate if it lowers the overall boiler steam production or efficiency. In general, recycled flue gas is preferred as ballast gas.

The primary ballast gas is therefore advantageously recycled flue gas, steam or CO₂-rich gas, and preferably recycled flue gas.

By mixing the primary ballast gas, such as recycled flue gas, with the gaseous fuel, any risks associated with the mixing of ballast gas with oxidizer are avoided.

The operation of the eductor-jet pump is preferably based on the venturi effect. Thereto the eductor-jet pump may be equipped with a venturi throat, i.e. a convergent-divergent nozzle generating a low pressure at said throat.

As indicated above, the primary oxidizer passage is adapted to inject a jet of primary oxidizer into the combustion zone in contact with the mixed jet, thereby generating a primary flame in the combustion zone.

According to one preferred embodiment, the primary oxidizer passage surrounds the eductor-jet pump. In that case, the jet of primary oxidizer is injected around the mixed jet. According to another advantageous embodiment the eductor-jet pump surrounds the primary oxidizer passage. In that case, the mixed jet is injected around the primary oxidizer jet. It is also possible to combine the two embodiments. In that case, the burner assembly comprises a first primary oxidizer passage surrounded by the eductor-jet pump and a second primary oxidizer passage surrounding the eductor-jet pump.

In the context of the present invention, a first structural element, such as a passage or the eductor-jet pump "surrounds" a second structural element when the first structural element encompasses or encircles the second structural element in the lengthwise direction, i.e. in the flow or propagation direction of the fluids (gaseous fuel, oxidizer, mixed jet, ballast gas). Likewise a first jet "surrounds" a second jet or a flame when the first jet encompasses or encircles the second jet or the flame in the flow direction of the fluids. The term "surround" does not require the two elements, whether structural or dynamical, to be in contact one with the other. For example, a first passage may be surrounded by a second passage even if the first and second passages are separated by a third passage positioned between the first and second passage. Likewise, a second jet which surrounds a first jet may be separated from said first jet by an intermediate jet.

As explained above, the burner assembly may comprise at least one secondary oxidizer passage for injecting a jet of secondary oxidizer at a distance from the mixed jet and the primary oxidizer jet(s) so as to achieve staged oxidizer injection.

Each secondary oxidizer passage may comprise one or multiple secondary oxidizer injection nozzles.

According to one embodiment, the burner assembly comprises a secondary oxidizer passage which surrounds the eductor-jet pump and the primary oxidizer passage. In that case, said secondary oxidizer passage is adapted to inject the secondary oxidizer jet around the primary flame. Said secondary oxidizer passage can advantageously comprise a multitude of secondary oxidizer injection nozzles. In that case, the multitude of secondary oxidizer injection nozzles is preferably evenly distributed around the eductor-jet pump so that the corresponding secondary oxidizer sub-jets are evenly distributed around the primary flame.

The burner assembly may also comprise multiple secondary oxidizer passages. In that case the multiple secondary oxidizer passages are advantageously positioned around the eductor-jet pump and are preferably evenly distributed around the eductor-jet pump. This again permits to distribute the corresponding secondary oxidizer jets to be evenly distributed around the primary flame.

The burner assembly according to the invention may also comprise one or more secondary fuel passages for injecting a jet of secondary fuel at a distance from the primary flame. Each secondary fuel passage may have one or more injection nozzles.

In particular, the burner assembly may comprise a secondary fuel passage which surrounds the eductor-jet pump and the primary oxidizer passage. In that case, said secondary fuel passage injects the secondary fuel around the primary flame. Such a secondary fuel passage may advantageously comprise a multitude of secondary fuel injection nozzles, whereby said secondary fuel nozzles are preferably evenly distributed around the eductor-jet pump. In that case, the corresponding secondary fuel sub-jets are injected into the combustion zone in a manner evenly distributed around the primary flame.

The burner assembly may comprise multiple secondary fuel passages. In particular, the burner assembly may comprise multiple secondary fuel passages positioned around the eductor-jet pump. In the latter case, said multiple secondary fuel passages are preferably evenly distributed around the eductor-jet pump.

As explained above, by means of the injection of secondary oxidizer through the secondary oxidizer passage(s) oxidizer injection can be staged and/or by means of the injection of secondary fuel through the secondary fuel injection passage(s) fuel injection can be staged, thereby achieving staged combustion and further reducing NOx formation.

According to one embodiment, the secondary ballast gas passage may surround the eductor-jet pump and the primary oxidizer passage. The jet of secondary ballast gas is then injected around the primary flame.

According to a preferred embodiment, the secondary ballast gas passage may be positioned so as to inject the secondary ballast gas jet between the primary flame and the secondary oxidizer jet. This can be achieved by means of the secondary ballast gas passage being positioned between the eductor-jet pump and a secondary oxidizer passage. The secondary ballast gas passage may be surrounded by a secondary oxidizer passage. According to one particular configuration of the burner assembly, the assembly comprises a primary oxidizer passage surrounding the eductor-jet pump, the secondary ballast gas passage surrounding said primary oxidizer passage and the secondary oxidizer passage surrounding said secondary ballast gas passage.

When the burner assembly comprises at least one secondary fuel passage, the burner assembly comprises a secondary ballast gas passage which is positioned so as to inject a secondary ballast gas jet between the primary flame and the secondary oxidizer jet. This is achieved by means of a secondary ballast gas passage positioned between the eductor-jet pump and a secondary fuel passage. The secondary ballast gas passage may be surrounded by a secondary fuel passage. According to one particular configuration of the burner assembly, the assembly comprises the primary oxidizer passage surrounding the eductor-jet pump, the secondary ballast gas passage surrounding said primary oxidizer passage and the secondary fuel passage surrounding said secondary ballast gas passage.

The burner assembly may further comprise a tertiary ballast gas passage for injecting a tertiary ballast gas jet, whereby said tertiary ballast gas jet is injected at a distance l_{bt} from the mixed jet which is greater than the distance l_{bs} between the mixed jet and the secondary ballast jet. Such a tertiary ballast gas jet may in particular be injected at a greater distance from the mixed gas jet than the secondary oxidizer jet and/or secondary fuel jet. In particular, the tertiary ballast gas passage may surround the secondary oxidizer passage. According to a further embodiment, the tertiary ballast gas passage may surround the secondary fuel passage.

For example, the burner assembly comprises the primary oxidizer passage which surrounds the eductor-jet pump, the secondary ballast gas passage which surrounds the primary oxidizer passage, the secondary oxidizer passage or multiple secondary oxidizer passages which surround(s) the secondary ballast gas passage and a tertiary ballast gas passage which surrounds the one or more secondary oxidizer passages.

According to a further example, the burner assembly comprises the primary oxidizer passage which surrounds the eductor-jet pump, the secondary ballast gas passage which surrounds the primary oxidizer passage, the secondary fuel passage or multiple secondary fuel passages which surround(s) the secondary ballast gas passage and a tertiary ballast gas passage which surrounds the one or more secondary fuel passages.

The injection of secondary and or tertiary ballast gas jets provide for further dilution of the gaseous fuel and or the oxidizer, thereby further reducing NOx formation.

According to one embodiment of the invention, all of the eductor-jet pump and the respective injection passages terminate in a same plane facing the combustion zone. Such a plane is typically, but not necessarily, perpendicular to the main flow direction of the fluids. Such a plane may, in particular, coincide with a wall of the combustion chamber of the furnace. All of the eductor-jet pump and the injection passages may be recessed within the burner assembly with respect to the combustion chamber of the furnace. Some of the eductor-jet pump and the injection passages may be further recessed within the burner assembly than others. According to an alternative embodiment, some of the eductor-jet pump and the injection passages are recessed within the burner assembly with respect to the combustion chamber of the furnace, whereas others terminate in a plane coinciding or substantially coinciding with a wall of the combustion chamber.

In particular, the present invention includes a burner assembly in which the eductor-jet pump and the primary oxidizer passage are recessed within the burner assembly so that the root of the primary flame is located within a recess of the burner assembly and upstream of the combustion chamber of the furnace. The eductor-jet pump and the primary oxidizer passage advantageously terminate upstream of the other injection passages of the burner assembly (ballast gas injection passages, secondary and tertiary oxidizer passages, secondary and tertiary fuel injection passages).

The present invention also includes a burner assembly in which the eductor-jet pump is recessed within the burner assembly and terminates upstream of the secondary and optional tertiary injection passages and whereby the primary oxidizer passage comprises primary oxidizer injection nozzles or openings which are equally recessed within the burner assembly so that the root of the primary flame is located within a recess of the burner assembly upstream of the combustion chamber of the furnace. At least some of the primary oxidizer injection nozzles or openings are located at different distances from the mixed gas injection point. In that case, the primary oxidizer injection nozzles or openings are positioned so as to inject primary oxidizer sub-jets at different distances from the mixed jet so as to achieve staged injection of the primary oxidizer.

The burner assembly typically comprises a burner block through which the eductor-jet pump and the respective injection passages pass. Such a burner block is typically made of mineral or ceramic refractory material and facilitates the integration of the burner assembly in the walls of the combustion chamber. In that case, the burner assembly typically comprises a burner block and a metallic injector assembly defining the eductor-jet pump and the respective injection passages within the block. In some cases, the outer surface of one or more injection passages may be defined by the inner surface of the through bore in the burner block in which the passage is located.

The present invention also relates to furnaces comprising a combustion zone in a combustion chamber and whereby at least one burner assembly according to any one of the above embodiments is mounted in said combustion chamber. Such a furnace may, for example, be a boiler or a preheater.

Using the burner assembly of the present invention, it is possible, at identical or substantially identical burner powers, to regulate and vary flame properties such as the flame length, by controlling the injection velocities and/or swirls of the respective jets.

The burner assembly of the present invention in particular makes it possible to produce reduced-NOx flames without undue lengthening of said flame and as this can be achieved with a burner assembly of relatively small dimensions, the burner assembly is particularly suited for use in relatively narrow combustion chambers, such as those frequently encountered in boilers. Consequently, the present invention relates in particular to steam generation boilers equipped with at least one burner assembly as described above.

The invention also concerns a method of combusting a gaseous fuel with oxidizer in a combustion zone. According to the invention, a primary gaseous fuel is mixed with ballast gas by entrainment of a suction fluid by a motive fluid in an eductor-jet pump. A mixed gas is thereby obtained. A j et of the mixed gas is injected into the combustion zone. A j et of primary oxidizer is likewise injected into the combustion zone in contact with the mixed gas jet. In this manner, a primary flame is generated in the combustion zone by combustion of the mixed gas with the primary oxidizer. When the primary flame is a fuel-rich flame, i.e. when it contains fuel in excess of the amount of fuel which would stoichiometrically combust with the primary oxidizer, at least one jet of secondary oxidizer is injected into the combustion zone at a distance ℓₒₛ (>0) from the mixed jet so as to generate secondary combustion, downstream of the primary flame, of the mixed gas with the secondary oxidizer, or rather of the portion of primary fuel which has not combusted in the primary flame with the secondary oxidizer. When the primary flame is an oxygen-rich flame, i.e. when it contains primary oxidizer in excess of the amount of oxidizer required to stoichiometrically combust the fuel, at least one jet of secondary gaseous fuel is injected into the combustion zone at a distance l_{fs} (>0) from the mixed jet so as to generate secondary combustion of the primary oxidizer with the secondary fuel downstream of the primary flame, or rather the combustion of the portion of primary oxidizer not consumed in the primary flame.

In order to further dilute the flame, thereby lowering the flame temperature and NOx formation, a secondary ballast gas jet is injected into the combustion zone.

It is also possible to combine fuel and oxidizer staging. For example, secondary oxidizer can be injected into the combustion zone at a distance ℓₒₛ from the mixed jet and secondary fuel can be injected into the combustion zone at a distance l_{fs} > lₒₛ from the mixed jet. It is likewise possible to inject a tertiary oxidizer jet at a distance lₒₜ > lₒₛ from the mixed jet and/or to inject a tertiary fuel jet at a distance l_{ft} > l_{fs} from the mixed jet.

Preferably, the gaseous primary fuel is the motive fluid and the primary ballast gas is the entrained or suction fluid.

The one or more ballast gases, including the primary ballast gas, are advantageously selected from the group comprising steam, CO₂-rich gas and recycled flue gas, recycled flue gas being generally preferred.

According to one option, the primary oxidizer jet is injected around the mixed gas jet. According to a further option, the mixed gas jet is injected around the primary oxidizer jet. In an embodiment combining those two options, the mixed gas jet is injected around a first primary oxidizer jet and a second primary oxidizer jet is injected around the mixed gas jet.

When a secondary oxidizer jet is injected, this secondary oxidizer jet may be injected around the mixed gas jet and the primary oxidizer jet, so that the secondary oxidizer jet surrounds the primary flame.

The secondary oxidizer j et may also be divided into a multitude of secondary oxidizer sub-jets, for example by injecting the secondary oxidizer through multiple secondary oxidizer passages or through multiple secondary oxidizer injection nozzles. The multitude of secondary oxidizer sub-jets may be injected at injections points positioned around the injection point of the mixed gas jet. Advantageously, the multiple secondary oxidizer sub-jets are injected in a manner evenly distributed around the mixed gas jet.

Similarly, when a secondary fuel jet is injected, this secondary fuel jet may be injected around the mixed gas jet and the primary oxidizer j jet, so that the secondary fuel j jet surrounds the primary flame.

The secondary fuel jet may also be divided into a multitude of secondary fuel sub-jets, for example by injecting the secondary fuel through multiple secondary fuel passages or through multiple secondary fuel injection nozzles. The multitude of secondary fuel sub-jets may be injected at injections points positioned around the injection point of the mixed gas jet. Advantageously, the multiple secondary fuel sub-jets are injected in a manner evenly distributed around the mixed gas jet.

Such a secondary ballast gas jet can advantageously be injected around the mixed gas jet and the primary oxidizer jet so as to surround the primary flame in the combustion zone.

When a secondary oxidizer jet is injected into the combustion zone, the secondary ballast gas jet can usefully be injected between, on the one hand, the mixed gas jet and the primary oxidizer jet and, on the other hand, the secondary oxidizer jet. In particular, the secondary oxidizer jet and the secondary ballast gas jet can be injected so that the secondary oxidizer jet is injected around the secondary ballast gas jet.

Likewise, when the secondary fuel jet is injected into the combustion zone, the secondary ballast gas jet can usefully be injected between, on the one hand, the mixed gas jet and the primary oxidizer jet and, on the other hand, the secondary fuel jet. In particular, the secondary fuel jet and the secondary ballast gas jet can be injected so that the secondary fuel jet is injected around the secondary ballast gas jet.

In order to further reduce thermal NOx formation, a tertiary ballast gas jet can be injected in addition to the secondary ballast gas jet. Such a tertiary ballast gas jet is injected at a distance l_{bt} from the mixed gas jet which is greater than the distance l_{bs} between the secondary ballast gas jet and the mixed gas jet. The tertiary ballast gas can advantageously be injected around the secondary oxidizer jet, when a secondary oxidizer jet is injected, or around the secondary fuel jet, when a secondary fuel jet is injected.

A different ballast gas may be used for the primary, the secondary and the tertiary ballast gas jets, but, in general, the same ballast gas will be used, preferably recycled flue gas, also described as recycled combustion gas.

Similarly, the gaseous fuel for the primary, secondary and tertiary fuel jets may be the same or different. Suitable gaseous fuels are, for example, natural gas, LPG, butane, methane, propane, etc. or blast furnace gas, coke oven gas, etc. The gaseous fuel can thus be a high calorific fuel, and in particular a gaseous fuel having a Net Heating Value of at least 6000 kcal/nm³, typically from 6000 kcal/nm³ to 33000 kcal/nm³, or a low calorific fuel, such as a gaseous fuel having a net calorific value of less than 6000 kcal/nm³, typically from 2000 kcal/nm³ to less than 6000 kcal/nm³. High calorific primary gaseous fuels can advantageously be used when the primary flame is fuel-lean or fuel-rich. In order to reduce NOx formation, low calorific primary gaseous fuels are preferred when the primary flame is fuel-rich. The gaseous fuel can also be gas-entrained pulverized liquid fuel or gas-entrained particulate fuel. In the latter case, additional safety precautions may be necessary to avoid problems which may arise due to erosion.

The same or a different oxidizer can be used for the primary, secondary and tertiary oxidizer jets. Preferably the oxidizer is low in nitrogen and rich in oxygen. Preferred oxidizers contain at least 80% by volume of oxygen, preferably at least 90% by volume.

The method according to the present invention is particularly useful for heating a load in a furnace, such as the heating of water or superheating of steam in a boiler or the heating of crude oil in a preheater. The method according to the present invention is more specifically useful for generating steam in a boiler.

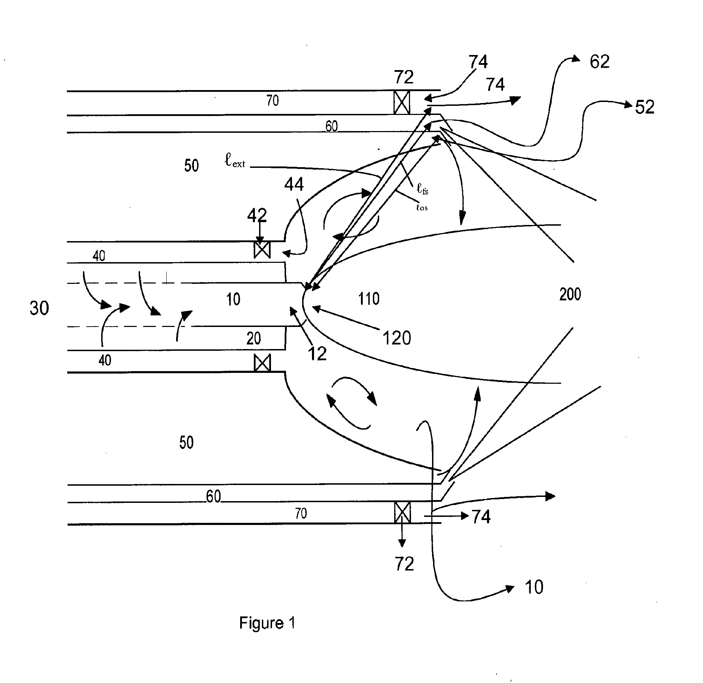

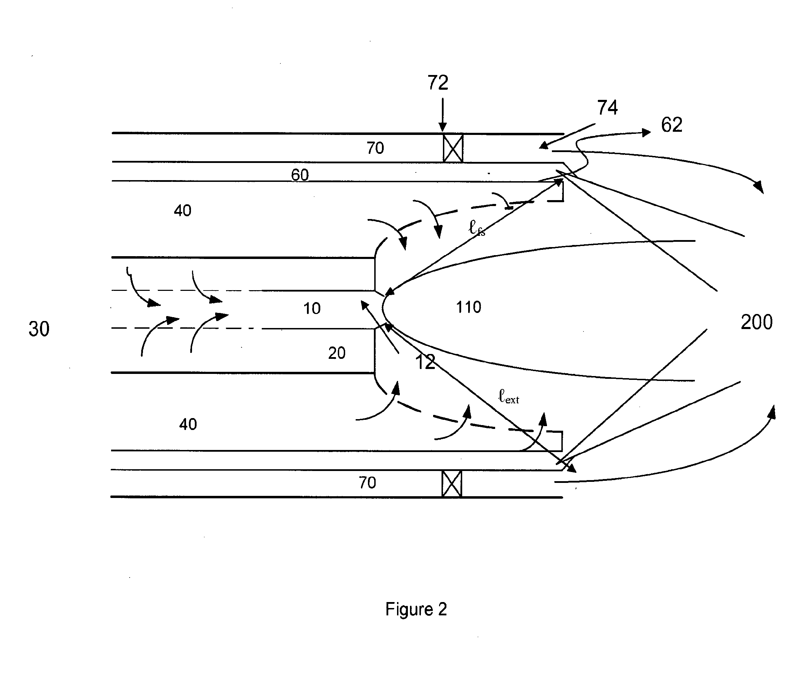

The present invention and its advantages are described in further detail in the examples hereafter, reference being made to figures 1 and 2, whereby:
- Figure 1 is a partial and schematic cross section view of a first burner assembly according to the invention and
- Figure 2 is a partial and schematic cross section view of a second burner assembly according to the invention.

In figures 1 and 2, the same reference numbers are used to identify illustrated specific technical features.

Figure 1 more specifically shows, in cross section, the metallic injector assembly of a first embodiment of a burner assembly of the present invention. This metallic injector assembly is laterally surrounded by a burner block (not shown) of suitable size and dimension for its incorporation in a furnace wall.

The burner assembly comprises a central primary fuel passage 10 surrounded by a primary ballast gas passage 20. The primary fuel passage 10 is connected to a source of primary fuel gas (not shown), such as natural gas. The primary ballast gas passage 20 is connected to a source of primary ballast gas (not shown), such as a flue gas recycle system.

The primary fuel passage 10 and the primary ballast gas passage 20 together form an eductor-jet pump 30, whereby the primary ballast gas is entrained by the gaseous fuel into the primary fuel passage 10 so as to mix with the primary fuel inside said primary fuel passage 10, the mixture of primary fuel and primary ballast gas being then injected towards the combustion chamber 200 of the furnace through the mixed jet injection nozzle 12.

Eductor-jet pump 30 is recessed within the burner assembly so that the mixed jet injection nozzle 12 is located within the burner throat 100 of the burner assembly upstream of combustion chamber 200.

The eductor-jet pump 30 is surrounded by primary oxidizer passage 40. Said primary oxidizer passage 40 is connected to a source of primary oxidizer (not shown), such as an air compressor or, and preferably, a container or supply pipe of oxygen-rich gas. The primary oxidizer passage 40 is equipped with a swirler 42 upstream of primary oxidizer injection nozzle 44, so that the primary oxidizer is injected into burner throat 100 around and in contact with the mixed jet with a swirling movement.

The gaseous fuel present in the mixed jet combusts with the primary oxidizer to form a primary flame 110. The root 120 of said primary flame 110 is located within burner throat 100.

Primary oxidizer passage 40 is surrounded by a secondary oxidizer passage 50. Said secondary oxidizer passage 5 is connected to a source (not shown) of secondary oxidizer, such as a source of air or, preferably, of oxygen-rich gas. The secondary oxidizer source may be the same as or different from the primary oxidizer source. Secondary oxidizer passage 50 comprises a secondary oxidizer injection nozzle 52 positioned at a distance lₒₛ from mixed jet injection nozzle 12. In reality, in the illustrated burner assembly, the secondary oxidizer passage 50 comprises a large number (between 20 and 50) of such secondary oxidizer injection nozzles 52 positioned at a distance lₒₛ from mixed jet injection nozzle 12 and evenly distributed around said mixed jet injection nozzle 12 so as to form a circle of secondary oxidizer injection nozzles 52 centred around the axis of primary fuel passage 10.

Secondary oxidizer passage 50 is in turn surrounded by a secondary fuel passage 60 which terminates in a substantial number of secondary fuel nozzles 62 equally positioned in a circle centred around the axis of primary fuel passage 10. The distance l_{fs} between mixed gas injection nozzle 12 and each of the secondary fuel nozzles being only marginally different from the distance lₒₛ between the secondary oxidizer nozzles 52 and mixed jet injection nozzle 12. Secondary fuel passage 60 is connected to a source of secondary fuel (not shown) which may be different from or identical to the primary fuel source. Such a burner assembly is highly flexible and allows different modes of operation, for example fuel-lean or fuel-rich primary flame 110, while achieving substantially equal flame properties such as flame geometry, including flame length, and temperature or temperature distribution.

Obviously, the order of the secondary oxidizer passage 50 and the secondary fuel passage 60 can be reversed.

Secondary oxidizer and fuel passages 50, 60 are surrounded by outer passage 70. Outer passage 70 is equipped with a swirler 72 upstream of outer injection nozzle 74. Outer injection nozzle 74 forms a circle centred around the axis of primary fuel passage 10 and is located at a distance lₑₓₜ from said mixed gas injection nozzle 12, lₑₓₜ being greater than the distance lₒₛ between the secondary oxidizer nozzles 52 and mixed jet injection nozzle 12 and than the distance l_{fs} between the secondary fuel nozzles 62 and mixed jet injection nozzle 12.

According to the invention, outer passage 70 is connected to a source of secondary ballast gas, such as a source of steam, of CO₂ or, preferably, of recycled flue gas. The source of secondary ballast gas may be identical to or different from the primary ballast gas source.

Figure 2 shows, in cross section, the metallic injector assembly of a second embodiment of a burner assembly of the present invention conceived for operation with a fuel-lean primary flame.

This metallic injector assembly is likewise laterally surrounded by a burner block (not shown) of suitable size and dimension for its incorporation in a furnace wall.

The burner assembly of this embodiment comprises a central eductor-jet pump 30 of the type shown in figure 1.

Eductor-jet pump 30 is surrounded by primary oxidizer passage 40. Said primary oxidizer passage 40 is connected to a source of primary oxidizer (not shown), such as an air compressor or, and preferably, a container or supply pipe of oxygen-rich gas. The primary oxidizer passage 40 does not comprise a swirler. Instead, primary oxidizer passage 40 comprises primary oxidizer injection nozzles or openings 44 positioned evenly around mixed jet injection nozzle 12, but at different distances from said mixed jet injection nozzle 12, so as to achieve staged injection of the primary oxidizer.

Primary oxidizer passage 40 is surrounded by a secondary fuel passage 60 which terminates in a substantial number of secondary fuel nozzles 62 equally positioned in a circle centred around the axis of primary fuel passage 10 and located at a distance l_{fs} from mixed gas injection nozzle 12.

Secondary passage 60 is surrounded by outer passage 70. Outer passage 70 is equipped with a swirler 72 upstream of outer injection nozzle 74. Outer injection nozzle 74 forms a circle centred around the axis of primary fuel passage 10 and is located at a distance lₑₓₜ from said mixed gas injection nozzle 12, lₑₓₜ being greater than the distance l_{fs} between the secondary fuel nozzles 62 and mixed jet injection nozzle 12.

According to the invention, outer passage 70 is connected to a source of secondary ballast gas, such as a source of steam, of CO₂ or, preferably, of recycled flue gas. The source of secondary ballast gas may be identical to or different from the primary ballast gas source.

## Claims

1. Burner assembly comprising :
• a primary fuel passage (10) for transporting gaseous primary fuel through the burner assembly towards a combustion zone and a primary ballast gas passage (20) for transporting primary ballast gas through the burner assembly to the combustion zone,
• a primary oxidizer passage (40) for injecting a jet of primary oxidizer into the combustion zone, and
• a secondary oxidizer passage (50) for injecting a jet of secondary oxidizer into the combustion zone and/or a secondary fuel passage (60) for injecting a jet of secondary fuel into the combustion zone,
whereby:
• the primary fuel passage (10) and the primary ballast gas passage (20) together form an eductor-jet pump (30) for generating a mixed jet of primary fuel and primary ballast gas by entrainment of a suction fluid by a motive fluid and for injecting said mixed jet into the combustion zone,
• the primary oxidizer passage (40) is adapted to inject the jet of primary oxidizer into the combustion zone in contact with the mixed jet to generate a primary flame (110) in the combustion zone,
• the secondary oxidizer passage (50) is adapted to inject the jet of secondary oxidizer into the combustion zone at a distance ℓₒₛ from the mixed jet and/or the secondary fuel passage (60) is adapted to inject the jet of secondary fuel into the combustion zone at a distance ℓ_{fs} from the mixed jet,
**characterized in that** the burner assembly further comprises a secondary ballast gas passage for injecting a secondary ballast gas jet into the combustion zone.

2. Burner assembly according to claim 1, whereby the primary oxidizer passage (40) surrounds the eductor-jet pump (30).

3. Burner assembly according to any one of the preceding claims, whereby the secondary oxidizer passage (50) surrounds the eductor-jet pump (30) and the primary oxidizer passage (40) and/or whereby the secondary fuel passage (60) surrounds the eductor-jet pump (30) and the primary oxidizer passage (40).

4. Burner assembly according to any one of the preceding claims, whereby the secondary ballast gas passage surrounds the eductor-jet pump (30) and the primary oxidizer passage (40).

5. Burner assembly according to any one of the preceding claims, whereby the secondary ballast gas passage is positioned between the eductor-jet pump (30) and the secondary oxidizer passage (50) or between the eductor-jet pump (30) and the secondary fuel passage (60).

6. Furnace comprising a combustion zone in a combustion chamber (200) and at least one burner according to any one of the preceding claims mounted in said combustion chamber (200), preferably a steam generation boiler.

7. Method of combusting fuel with oxidizer in a combustion zone, the method comprising:
- mixing a primary gaseous fuel and ballast gas by entrainment of a suction fluid by a motive fluid in an eductor-jet pump (30) so as to obtain a mixed gas,
- injecting a jet of the mixed gas into the combustion zone,
- injecting a jet of primary oxidizer into the combustion zone in contact with the mixed gas jet so as to generate a primary flame (110) in the combustion zone by combustion of the mixed gas with the primary oxidizer,
- when the primary flame (110) is a fuel-rich flame, injecting a jet of secondary oxidizer into the combustion zone at a distance ℓₒₛ (>0) from the mixed jet so as to generate secondary combustion of the mixed gas with the secondary oxidizer downstream of the primary flame and
- when the primary flame is an oxygen-rich flame, injecting a jet of secondary gaseous fuel into the combustion zone at a distance ℓ_{fs} (>0) from the mixed jet so as to generate secondary combustion of the primary oxidizer with the secondary fuel downstream of the primary flame,
**characterized in that** a secondary ballast gas jet is further injected into the combustion zone.

8. Method according to claim 7, whereby the gaseous primary fuel is the motive fluid and whereby the primary ballast gas is the suction fluid.

9. Method according to claim 7 or 8, whereby the primary ballast gas is steam, CO₂-rich gas or recycled flue gas, preferably recycled flue gas.

10. Method according to any one of claims 7 to 9, whereby the primary oxidizer jet is injected around the mixed gas jet.

11. Method according to any one of claims 7 to 10, whereby the secondary oxidizer jet is injected around the mixed gas jet and the primary oxidizer jet and/or whereby the secondary fuel is injected around the mixed gas jet and the primary oxidizer jet.

12. Method according to any one of claims 7 to 11, whereby the secondary ballast gas jet is injected around the mixed gas jet and the primary oxidizer jet.

13. Method according to any one of claims 7 to 12, whereby, when a secondary oxidizer jet is injected into the combustion zone, the secondary ballast gas jet is injected between, on the one hand, the mixed gas jet and the primary oxidizer jet and, on the other hand, the secondary oxidizer jet or, when a secondary fuel is injected into the combustion zone, the secondary ballast gas jet is injected between, on the one hand, the mixed gas jet and the primary oxidizer jet and, on the other hand, the secondary fuel jet.

14. Method according to any one of claims 7 to 13, whereby at least one and preferably all of the oxidizer jets contain at least 80% by volume of oxygen, preferably at least 90% by volume.

15. Use of a method according to any one of claims 7 to 14, for heating a load in a furnace, preferably for generating steam in a boiler.

## Patentansprüche

1. Brennerbaugruppe, umfassend:
• einen Primärbrennstoffdurchlass (10) zum Befördern von gasförmigem Primärbrennstoff durch die Brennerbaugruppe in Richtung einer Verbrennungszone und einen Primärballastgasdurchlass (20) zum Befördern von Primärballastgas durch die Brennerbaugruppe zur Verbrennungszone,
• einen Primäroxidansdurchlass (40) zum Einspritzen eines Primäroxidansstrahls in die Verbrennungszone und
• einen Sekundäroxidansdurchlass (50) zum Einspritzen eines Sekundäroxidansstrahls in die Verbrennungszone und/oder einen Sekundärbrennstoffdurchlass (60) zum Einspritzen eines Sekundärbrennstoffstrahls in die Verbrennungszone,
wobei:
• der Primärbrennstoffdurchlass (10) und der Primärballastgasdurchlass (20) zusammen eine Ejektor-Strahlpumpe (30) zum Erzeugen eines gemischten Primärbrennstoff/Primärballastgas-Strahls durch Mitreißen eines Saugfluids durch ein Treibfluid und zum Einspritzen des gemischten Strahls in die Verbrennungszone ausbilden,
• der Primäroxidansdurchlass (40) so ausgestaltet ist, dass der Primäroxidansstrahl in Kontakt mit dem gemischten Strahl in die Verbrennungszone eingespritzt wird, um in der Verbrennungszone eine Primärflamme (110) zu erzeugen,
• der Sekundäroxidansdurchlass (50) so ausgestaltet ist, dass der Sekundäroxidansstrahl in einem Abstand ℓₒₛ von dem gemischten Strahl in die Verbrennungszone eingespritzt wird, und/oder der Sekundärbrennstoffdurchlass (60) so ausgestaltet ist, dass der Sekundärbrennstoffstrahl in einem Abstand ℓ_{fs} von dem gemischten Strahl in die Verbrennungszone eingespritzt wird,
**dadurch gekennzeichnet, dass** die Brennerbaugruppe weiterhin einen Sekundärballastgasdurchlass zum Einspritzen eines Sekundärballastgasstrahls in die Verbrennungszone umfasst.

2. Brennerbaugruppe nach Anspruch 1, wobei der Primäroxidansdurchlass (40) die Ejektor-Strahlpumpe (30) umgibt.

3. Brennerbaugruppe nach einem der vorangehenden Ansprüche, wobei der Sekundäroxidansdurchlass (50) die Ejektor-Strahlpumpe (30) und den Primäroxidansdurchlass (40) umgibt und/oder wobei der Sekundärbrennstoffdurchlass (60) die Ejektor-Strahlpumpe (30) und den Primäroxidansdurchlass (40) umgibt.

4. Brennerbaugruppe nach einem der vorangehenden Ansprüche, wobei der Sekundärballastgasdurchlass die Ejektor-Strahlpumpe (30) und den Primäroxidansdurchlass (40) umgibt.

5. Brennerbaugruppe nach einem der vorangehenden Ansprüche, wobei der Sekundärballastgasdurchlass zwischen der Ejektor-Strahlpumpe (30) und dem Sekundäroxidansdurchlass (50) oder zwischen der Ejektor-Strahlpumpe (30) und dem Sekundärbrennstoffdurchlass (60) angeordnet ist.

6. Ofen, umfassend eine Verbrennungszone in einer Verbrennungskammer (200) und wenigstens einen in der Verbrennungskammer (200) installierten Brenner nach einem der vorangehenden Ansprüche, vorzugsweise ein Dampferzeugungskessel.

7. Verfahren zur Verbrennung von Brennstoff mit Oxidans in einer Verbrennungszone, wobei das Verfahren umfasst:
- Mischen eines gasförmigen Primärbrennstoffs mit Ballastgas durch Mitreißen eines Saugfluids durch ein Treibfluid in einer Ejektor-Strahlpumpe (30), um ein Mischgas zu erhalten,
- Einspritzen eines Mischgasstrahls in die Verbrennungszone,
- Einspritzen eines Primäroxidansstrahls in die Verbrennungszone in Kontakt mit dem Mischgasstrahl, um in der Verbrennungszone durch Verbrennung des Mischgases mit dem Primäroxidans eine Primärflamme (110) zu erzeugen,
- wenn die Primärflamme (110) eine brennstoffreiche Flamme ist, Einspritzen eines Sekundäroxidansstrahls in die Verbrennungszone in einem Abstand ℓₒₛ (>0) von dem gemischten Strahl, um, der Primärflamme nachgeschaltet, eine Nachverbrennung des Mischgases mit dem Sekundäroxidans zu bewirken, und
- wenn die Primärflamme eine sauerstoffreiche Flamme ist, Einspritzen eines Sekundärbrennstoffgasstrahls in die Verbrennungszone in einem Abstand ℓ_{fs} (>0) von dem gemischten Strahl, um, der Primärflamme nachgeschaltet, eine Nachverbrennung des Primäroxidans mit dem Sekundärbrennstoff zu bewirken,
**dadurch gekennzeichnet, dass** weiterhin ein Sekundärballastgasstrahl in die Verbrennungszone eingespritzt wird.

8. Verfahren nach Anspruch 7, wobei der gasförmige Primärbrennstoff das Treibfluid ist und wobei das Primärballastgas das Saugfluid ist.

9. Verfahren nach Anspruch 7 oder 8, wobei das Primärballastgas Dampf, CO₂-reiches Gas oder rückgeführtes Rauchgas, vorzugsweise rückgeführtes Rauchgas, ist.

10. Verfahren nach einem der Ansprüche 7 bis 9, wobei der Primäroxidansstrahl um den Mischgasstrahl herum eingespritzt wird.

11. Verfahren nach einem der Ansprüche 7 bis 10, wobei der Sekundäroxidansstrahl um den Mischgasstrahl und den Primäroxidansstrahl herum eingespritzt wird und/oder wobei der Sekundärbrennstoff um den Mischgasstrahl und den Primäroxidansstrahl herum eingespritzt wird.

12. Verfahren nach einem der Ansprüche 7 bis 11, wobei der Sekundärballastgasstrahl um den Mischgasstrahl und den Primäroxidansstrahl herum eingespritzt wird.

13. Verfahren nach einem der Ansprüche 7 bis 12, wobei beim Einspritzen eines Sekundäroxidansstrahls in die Verbrennungszone der Sekundärballastgasstrahl zwischen dem Mischgasstrahl und dem Primäroxidansstrahl einerseits und dem Sekundäroxidansstrahl andererseits eingespritzt wird oder beim Einspritzen eines Sekundärbrennstoffs in die Verbrennungszone der Sekundärballastgasstrahl zwischen dem Mischgasstrahl und dem Primäroxidansstrahl einerseits und dem Sekundärbrennstoffstrahl andererseits eingespritzt wird.

14. Verfahren nach einem der Ansprüche 7 bis 13, wobei wenigstens einer und vorzugsweise alle der Oxidansstrahlen wenigstens 80 Vol.-%, vorzugsweise wenigstens 90 Vol.-%, Sauerstoff enthält/enthalten.

15. Verwendung eines Verfahrens nach einem der Ansprüche 7 bis 14 zum Erhitzen einer Last in einem Ofen, vorzugsweise zum Erzeugen von Dampf in einem Kessel.

## Revendications

1. Ensemble brûleur comprenant :
• un passage de combustible primaire (10) destiné à transporter du combustible primaire gazeux à travers l'ensemble brûleur vers une zone de combustion et un passage de gaz de ballast primaire (20) destiné à transporter un gaz de ballast primaire à travers l'ensemble brûleur vers la zone de combustion,
• un passage de comburant primaire (40) destiné à injecter un jet de comburant primaire dans la zone de combustion, et
• un passage de comburant secondaire (50) destiné à injecter un jet de comburant secondaire dans la zone de combustion et/ou un passage de combustible secondaire (60) destiné à injecter un jet de combustible secondaire dans la zone de combustion,
dans lequel :
• le passage de combustible primaire (10) et le passage de gaz de ballast primaire (20) forment ensemble une pompe à éjecteur (30) destinée à générer un jet mixte de combustible primaire et de gaz de ballast primaire par entraînement d'un fluide d'aspiration par un fluide moteur et à injecter ledit jet mixte dans la zone de combustion,
• le passage de comburant primaire (40) est adapté pour injecter le jet de comburant primaire dans la zone de combustion en contact avec le jet mixte pour générer une flamme primaire (110) dans la zone de combustion,
• le passage de comburant secondaire (50) est adapté pour injecter le jet de comburant secondaire dans la zone de combustion à une distance ℓₒₛ du jet mixte et/ou le passage de combustible secondaire (60) est adapté pour injecter le jet de combustible secondaire dans la zone de combustion à une distance ℓ_{fs} du jet mixte,
**caractérisé en ce que** l'ensemble brûleur comprend en outre un passage de gaz de ballast secondaire destiné à injecter un jet de gaz de ballast secondaire dans la zone de combustion.

2. Ensemble brûleur selon la revendication 1, dans lequel le passage de comburant primaire (40) entoure la pompe à éjecteur (30).

3. Ensemble brûleur selon l'une quelconque des revendications précédentes, dans lequel le passage de comburant secondaire (50) entoure la pompe à éjecteur (30) et le passage de comburant primaire (40) et/ou dans lequel le passage de combustible secondaire (60) entoure la pompe à éjecteur (30) et le passage de comburant primaire (40).

4. Ensemble brûleur selon l'une quelconque des revendications précédentes, dans lequel le passage de gaz de ballast secondaire entoure la pompe à éjecteur (30) et le passage de comburant primaire (40).

5. Ensemble brûleur selon l'une quelconque des revendications précédentes, dans lequel le passage de gaz de ballast secondaire est positionné entre la pompe à éjecteur (30) et le passage de comburant secondaire (50) ou entre la pompe à éjecteur (30) et le passage de combustible secondaire (60).

6. Four comprenant une zone de combustion dans une chambre de combustion (200) et au moins un brûleur selon l'une quelconque des revendications précédentes monté dans ladite chambre de combustion (200), de préférence une chaudière génératrice de vapeur.

7. Procédé de combustion de combustible avec un comburant dans une zone de combustion, le procédé comprenant :
- le mélange d'un combustible gazeux primaire et d'un gaz de ballast par entraînement d'un fluide d'aspiration par un fluide moteur dans une pompe à éjecteur (30) de façon à obtenir un gaz mixte,
- l'injection d'un jet du gaz mixte dans la zone de combustion,
- l'injection d'un jet de comburant primaire dans la zone de combustion en contact avec le jet de gaz mixte de façon à générer une flamme primaire (110) dans la zone de combustion par combustion du gaz mixte avec le comburant primaire,
- lorsque la flamme primaire (110) est une flamme riche en combustible, l'injection d'un jet de comburant secondaire dans la zone de combustion à une distance ℓₒₛ (> 0) du jet mixte de façon à générer une combustion secondaire du gaz mixte avec le comburant secondaire en aval de la flamme primaire et
- lorsque la flamme primaire est une flamme riche en oxygène, l'injection d'un jet de combustible gazeux secondaire dans la zone de combustion à une distance ℓ_{fs} (> 0) du jet mixte de façon à générer une combustion secondaire du comburant primaire avec le combustible secondaire en aval de la flamme primaire,
**caractérisé en ce qu'**un jet de gaz de ballast secondaire est en outre injecté dans la zone de combustion.

8. Procédé selon la revendication 7, dans lequel le combustible primaire gazeux est le fluide moteur et dans lequel le gaz de ballast primaire est le fluide d'aspiration.

9. Procédé selon la revendication 7 ou 8, dans lequel le gaz de ballast primaire est de la vapeur, un gaz riche en CO₂ ou un gaz de carneau recyclé, de préférence un gaz de carneau recyclé.

10. Procédé selon l'une quelconque des revendications 7 à 9, dans lequel le jet de comburant primaire est injecté autour du jet de gaz mixte.

11. Procédé selon l'une quelconque des revendications 7 à 10, dans lequel le jet de comburant secondaire est injecté autour du jet de gaz mixte et le jet de comburant primaire et/ou dans lequel le combustible secondaire est injecté autour du jet de gaz mixte et du jet de comburant primaire.

12. Procédé selon l'une quelconque des revendications 7 à 11, dans lequel le jet de gaz de ballast secondaire est injecté autour du jet de gaz mixte et du jet de comburant primaire.

13. Procédé selon l'une quelconque des revendications 7 à 12, dans lequel, lorsqu'un jet de comburant secondaire est injecté dans la zone de combustion, le jet de gaz de ballast secondaire est injecté entre, d'une part, le jet de gaz mixte et le jet de comburant primaire, et d'autre part, le jet de comburant secondaire ou, lorsqu'un combustible secondaire est injecté dans la zone de combustion, le jet de gaz de ballast secondaire est injecté entre, d'une part, le jet de gaz mixte et le jet de comburant primaire et, d'autre part, le jet de combustible secondaire.

14. Procédé selon l'une quelconque des revendications 7 à 13, dans lequel au moins l'un et de préférence l'ensemble des jets de comburant contient au moins 80 % en volume d'oxygène, de préférence au moins 90 % en volume.

15. Utilisation d'un procédé selon l'une quelconque des revendications 7 à 14, pour chauffer une charge dans un four, de préférence pour générer de la vapeur dans une chaudière.
